# EUROPÄISCHE PATENTSCHRIFT

(11) **EP 2 288 668 B1**
(45) Veröffentlichungstag und Bekanntmachung des Hinweises auf die Patenterteilung: **29.07.2015**
(21) Anmeldenummer: 09761608.0
(22) Anmeldetag: 27.05.2009
(51) Int. Cl.: C09J 7/02

(54) **VERFAHREN ZUR HERSTELLUNG VON RELEASELINERN**
METHOD FOR PRODUCING RELEASE LINERS
PROCÉDÉ DE PRODUCTION DE PELLICULES ANTIADHÉSIVES

(30) Priorität: 10.06.2008 DE 102008027502
(43) Veröffentlichungstag der Anmeldung: 02.03.2011
(73) Patentinhaber: TESA SE, 20253 Hamburg (DE)
(72) Erfinder: JAUER, Stephan, 37085 Göttingen (DE); SOMMER, Birgit, 22846 Norderstedt (DE)
(86) Internationale Anmeldenummer: PCT/EP2009/056418
(87) Internationale Veröffentlichungsnummer: WO 2009/150045

(56) Entgegenhaltungen:
- EP-A- 0 523 660
- JP-A- 9 169 960
- JP-A- 2005 153 250

## Beschreibung

Die Erfindung betrifft ein Verfahren zur Herstellung von Releaselinern zur Regulierung der Abzugskräfte, sowie die Verwendung von Kontaktgiften zur entsprechenden Abzugskraftregulierung.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln auf ein Abdeckmaterial (auch als Trennmaterial bezeichnet) aufgebracht, das zusammen mit dem Klebeband aufgewickelt wird. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Abhäsive Beschichtungsmassen werden in großem Umfang zur Herstellung von Linern in der Beschichtung insbesondere von flächigen Materialien wie Papieren oder Folien verwendet, um die Adhäsionsneigung von adhärierenden Produkten gegenüber diesen Oberflächen zu verringern.

Wird ein doppelseitig klebendes, mit einem Liner ausgerüstetes Klebeband abgerollt, wird es normalerweise mit der offenen, also linerfreien Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen.

Allerdings muss der Liner vom Klebeband abziehbar sein. Durch den Liner selbst oder durch das Abziehen des Liners darf die Klebkraft der Haftklebemasse nicht wesentlich für die spätere Verwendung beeinträchtigt werden.

Gleichzeitig ist die Stabilität der antiadhäsiven Beschichtung (auch als Trennbeschichtung bezeichnet) auf dem Liner, also die Abhäsivität, über lange Zeiträume wichtig, um die Funktion dieser Beschichtung sowie die Eigenschaften der mit dem Liner eingedeckten Haftklebemasse zu gewährleisten.

Als Trennbeschichtung werden häufig vernetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen, wie Dibutylzinndiacetat, in der Masse zugegen.

Silikonbasierende Trennbeschichtungen auf additionsvernetzender Basis lassen sich durch Hydrosilylierung härten. Diese Trennsysteme umfassen üblicherweise die folgenden Bestandteile: ein alkenyliertes Polydiorganosiloxan (insbesondere lineare Polymere mit endständigen Alkenylgruppen), ein Polyorganowasserstoffsiloxan-Vernetzungsmittel sowie einen Hydrosilylierungskatalysator.

Als Katalysatoren für additionsvernetzende Silikonsysteme haben sich Platin oder Platinverbindungen, wie zum Beispiel der Karstedt-Katalysator [eine Pt(0)-Komplexverbindung] durchgesetzt.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Weiterhin sind verschiedene Arten von Organopolysiloxanmassen bekannt, die durch Erhitzen oder Bestrahlen vernetzen. Genannt seien Massen, wie sie zum Beispiel in der DE 600 01 779 T2 beschrieben werden, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte, direkt an die Siliciumatome gebundene Kohlenwasserstoffreste aufweisen und in Gegenwart eines Photosensibilisators vernetzt werden (siehe EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierte Kohlenwasserstoff direkt an den Siliciumatomen gebunden aufweisen, und Organopolysiloxanen mit direkt an die Siliciumatome gebundenen Vinylgruppen in Gegenwart eines Photosensibilisator hervorgerufen wird. Solche Massen werden beispielsweise in der US 4,725,630 A1 beschrieben.

Beim Einsatz der zum Beispiel in der DE 33 16 166 C1 beschriebenen Organopolysiloxanmassen, die mit Epoxygruppen substituierte, direkt an die Siliciumatomen gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Von den genannten Silikonen haben die additionsvernetzenden Silikone die größte ökonomische Bedeutung. Eine ungewünschte Eigenschaft dieser Systeme ist allerdings, ihre Empfindlichkeit gegenüber Katalysatorgiften, wie zum Beispiel Schwermetall-, Schwefel- und Stickstoffverbindungen (vgl. hierzu "Chemische Technik, Prozesse und Produkte" von R. Dittmeyer et al., Band 5, 5. Auflage, Wiley-VCH, Weinheim, Deutschland, 2005, Kapitel 6-5.3.2, Seiten 1142). Allgemein gilt, dass Elektronendonatoren als Platingifte angesehen werden können (A. Colas, Silicone Chemistry Overview, Technical Paper, Dow Corning). Demnach sind auch Phosphorverbindungen wie Phosphine und Phosphite als Platingifte anzusehen. Die Präsenz von Katalysatorgiften führt dazu, dass die Vernetzungsreaktion zwischen den unterschiedlichen Bestandteilen eines Silikontrennlackes nicht mehr oder nur zu einem geringen Teil stattfindet.

Daher wird bei der Herstellung von antiadhäsiven Silikonbeschichtungen die Anwesenheit von Kontaktgiften, insbesondere von Platingiften, streng vermieden.

EP 0 523 660 A1 beschreibt allerdings Trennschichtzusammensetzungen aus Alkenylgruppen aufweisenden Siloxancopolymeren, die Platin-Hydrosilylierungskatalysatoren und Mittel zur Verzögerung der Anlagerung von Sigebundenem Wasserstoff an aliphatische Doppelbindungen (Inhibitoren) enthalten.

JP 09 169960 A beschreibt eine Trennschicht aus einem härtbaren Polysiloxan und einem Platin-Hydrosilylierungskatalysator. Auf diese Trennschicht wird eine Acrylat-Haftklebemasse appliziert, welche Phosphor-, Schwefel- und Stickstoffverbindungen enthält, die als Katalysatorgifte fungieren.

Die praktische Anwendung der genannten antiadhäsiven Silikonbeschichtungen weist allerdings eine Reihe von Nachteilen auf.

So wird das Niveau der Abzugskraft einer Haftklebemasse von einem Silikon-Release-Liner üblicherweise durch Silikon-MQ-Harze (Silikon-Methylsilikon-Kautschuk-Harze) eingestellt. Je nach Anforderung an das Produkt wird ein unterschiedliches Niveau für die Abzugskräfte verlangt. Dies macht es erforderlich, mehrere Release-Liner mit verschiedenen MQ-Harz-Gehalten zu verwenden und damit auch zu bevorraten. Weiterhin können Releaseliner häufig nicht sofort nach der Produktion eingesetzt werden, weil die Eigenschaften des Liners noch kein konstantes Niveau erreicht haben. Dies zeigt sich insbesondere an Messungen der Trennkräfte. Diese sinken in der Regel in den ersten Tagen und Wochen nach der Produktion, bis sie ein konstantes Niveau erreichen. Der Effekt wird "post-curing" oder Nachvernetzung genannt. Die Zeit zwischen Produktion des Releaseliners und Beschichtung mit Haftklebemasse wird dem entsprechend post-curing-Zeit, Nachvernetzungszeit oder auch Reifezeit genannt. Je nach Anforderung an den Releaseliner und auf dem Releaseliner verwendeter

Haftklebemasse kann die Reifezeit mehrere Wochen betragen. Wegen der benötigten Reifezeit müssen die produzierten Releaseliner gelagert werden, wodurch Lagerkosten entstehen.

Eine weitere Problematik ergibt sich daraus, dass bei Laminaten von Releaselinern und Haftklebemassen manchmal ein Anstieg der Abzugskräfte bei der Lagerung beobachtet. Dem Fachmann ist dieser Effekt als "Adhesive Lock-up" oder im speziellen für Acrylate als "Acrylic Lock-up" bekannt. Dieser Effekt führt unter Umständen dazu, dass sich der Releaseliner nur schwer oder gar nicht mehr von der Haftklebemasse abziehen lässt und das Produkt somit unbrauchbar wird.

Aufgabe der Erfindung ist, die Nachteile des Standes der Technik zu vermeiden oder zumindest zu verringern. Insbesondere ist es wünschenswert,
- verschiedene Abzugskräfte, die sich zwischen einer acrylatbasierten Haftklebemasse, die sich auf einem mit einer Silikonbeschichtung ausgerüsteten Liner befindet, und diesem Liner einstellen zu können, ohne dass die Klebkraft der Haftklebemasse beeinflusst wird,
- die benötigte Reifezeit vor dem Einsatz des Releaseliners zu verkürzen, und/oder
- den Acrylic Lock-up zu verhindern.

Gelöst wird die Aufgabe durch die Behandlung von Silikonbeschichtungen auf Releaselinern mit Verbindungen, die für Hydrosilylierungskatalysatoren als Kontaktgifte wirken.

Derartige Hydrosilylierungskatalysatoren umfassen zum Beispiel Ruthenium, Rhodium, Palladium, Osmium, Indium oder insbesondere Platin, deren Komplexe und Verbindungen und/oder Katalysatorsysteme aus mehreren dieser Katalysatoren.

Besonders bevorzugt werden Kontaktgifte gewählt, die für häufige Hydrosilylierungskatalysatoren wie Chloroplatinsäure, Platinacetylacetonat, Komplexen von Platin(II)-halogeniden mit ungesättigten Verbindungen - wie beispielsweise Ethylen, Propylen, Organovinylsiloxanen, Styrol-, Hexamethyldiplatin, PtCl₂PtCl₃, Pt(CN)₃wirksam sind.

Entsprechend betreffen die Ansprüche 1 und 2 ein Verfahren zur Herstellung eines Releaseliners umfassend zumindest eine vernetzte Silikonbeschichtung auf Basis additionsvernetzender Polysiloxane sowie Hydrosilylierungskatalysatoren, wobei die Hydrosilylierungskatalysatoren Platin, eine Platin-Komplexverbindung oder eine Platinverbindung sind,
die Silikonbeschichtung mit Verbindungen behandelt wird, die für die Hydrosilylierungskatalysatoren als Kontaktgifte wirken, wobei die Kontaktgifte ausgewählt sind aus der Gruppe bestehend aus 2-Methyl-1 H-imidazol, Dicyandiamid, Diphenylamin, Triethylentetramin, Tris(2,4-di-tert-butylphenyl)phosphit, N-(2-Aminoethyl)piperazin, Dodecylamin, Dodecylmercaptan, Distearylpentaerythritoldiphosphit, Tributylphosphit, Triphenylphosphin, Triphenylphosphit, 1,4-Bisoxazolinbenzol, Benzimidazol-2-thiol, Didodecyl-3-3'-thiopropionat, 2,4-Bis-(n-octylthio)-6-(4-hydroxy-3,5-di-tert-butyl-anilino)-1,3,5 -triazin, 2-Ethylhexylthioglycolat, Pentaerythritol-tetra(3-mercaptopropionat); und das dadurch gekennzeichnet ist, dass
die Kontaktgifte unter Zusatz von Fremdsubstanzen, die ausgewählt sind aus der Gruppe bestehend aus Trägergasen und Lösungsmitteln, oder ohne Zusatz von Fremdsubstanzen, wie Trägergasen oder Lösungsmitteln, auf die Silikonbeschichtung aufgetragen, aufgewischt, aufgesprüht, aufgedruckt, aufgewalzt oder aus der Gasphase oder als Aerosol aufgebracht werden; und
auf die behandelte Silikonschicht eine Haftklebemassenschicht aufgetragen wird oder der Releaseliner mit der behandelten Silikonschicht auf eine Haftklebemassenschicht kaschiert wird.

Der Begriff "Herstellung" im Sinne dieser Schrift umfasst dabei sowohl die Neuherstellung eines Releaseliners als auch die Modifikation eines bereits existenten, unbehandelten Releaseliners durch die erfindungsgemäßen Verfahrensschritte, so dass ebenfalls ein neues Produkt entsteht.

Der Ausdruck "Regulierung der Abzugskräfte" umfasst dabei die Einstellung der Abzugskräfte auf ein bestimmtes Niveau, die Reduzierung der Reifezeit, also die Zeit zwischen der Herstellung des Releaseliners und der Kontaktierung mit einer auf dem Releaseliner abgelegten Haftklebemassenschicht (also die zeitliche Einstellung der Abzugskräfte auf einen für die Anwendung geeigneten Wert) und auch die Verhinderung von Reaktionen zwischen einer auf dem Releaseliner abgelegten Haftklebemasse und dem Silikon (also, die Verhinderung der diesbezüglichen Alterung des Systems und somit die zeitliche Veränderung der Abzugskräfte). Dementsprechend schließt die bezeichnete Verwendung alle Vorgänge ein, die zumindest eines, besser alle der genannten Effekte bewirken.

Die Präsenz von Platingiften führt dazu, dass eine platinkatalysierte Vernetzungsreaktion zwischen Bestandteilen der Klebmasse und den im Releaseliner befindlichen Si-H-Gruppen des Silikon-Vernetzers teilweise oder vollständig verhindert wird. Mit anderen Worten, durch die Platingifte lassen sich die Reaktionen an der Grenzfläche Silikon/Klebmasse und damit die Abzugskräfte beeinflussen.
Der Releaseliner ist erfindungsgemäß mit einer Silikonbeschichtung ausgerüstet. Vorzugsweise handelt es bei der auf dem Liner vorgesehene Silikonbeschichtung um ein additionsvernetzendes Silikon.

Kontakt- oder auch Katalysatorgifte sind Stoffe, die die Oberfläche eines Katalysators belegen und dadurch temporär oder permanent seine Wirkung mindern oder auch gänzlich ausschalten, also Stoffe, die bei Kontakt mit Katalysatoren diese desaktivieren.

Die erfindungsgemäß einsetzbaren Kontaktgifte, insbesondere Platingifte, werden aus der Auflistung umfassend die folgenden Substanzen ausgewählt:

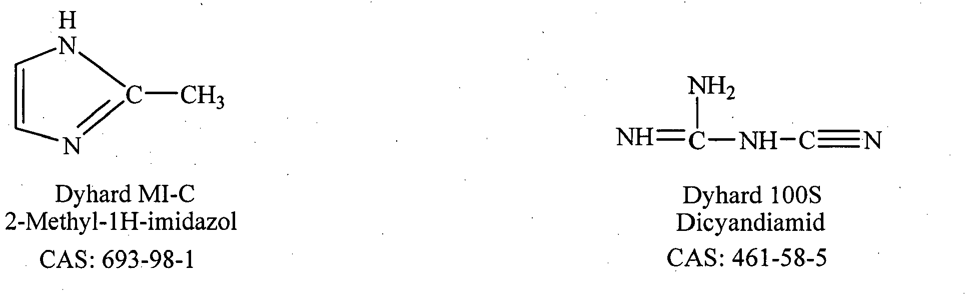

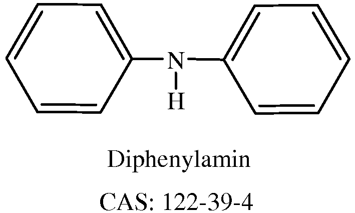

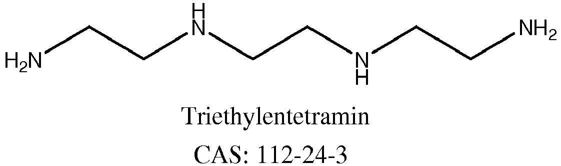

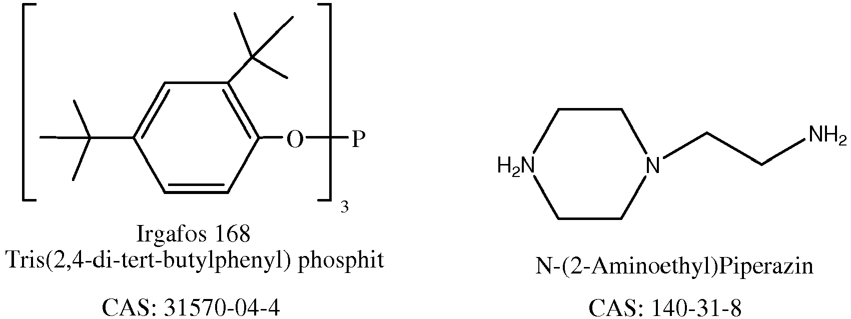

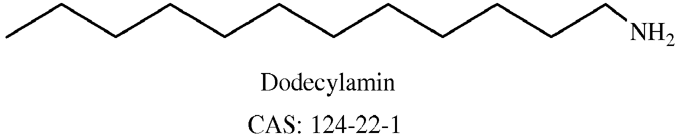

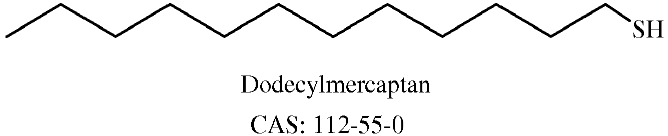

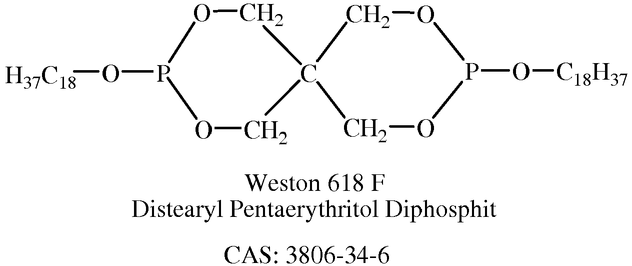

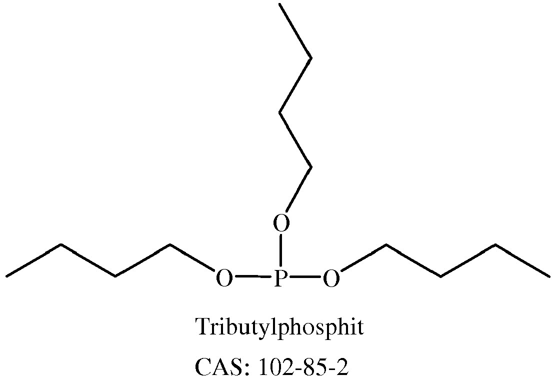

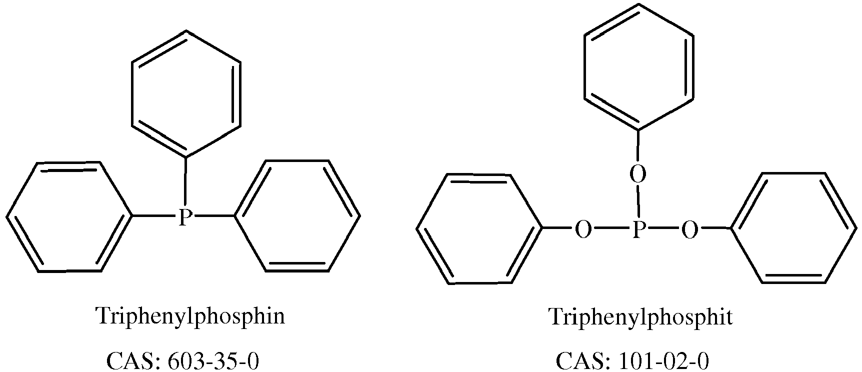

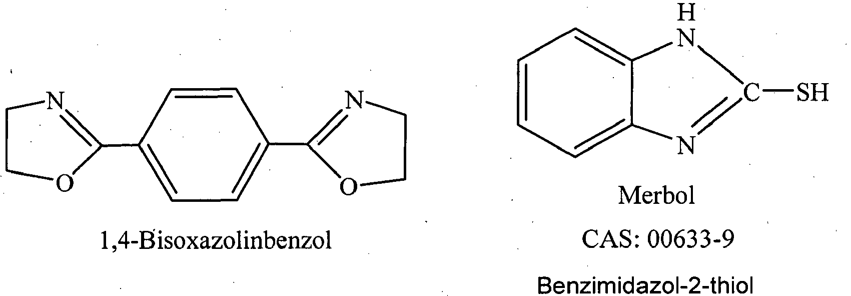

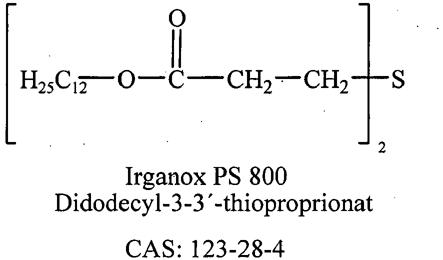

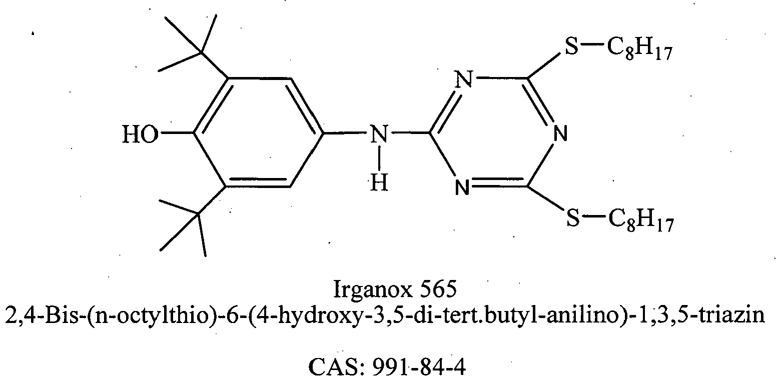

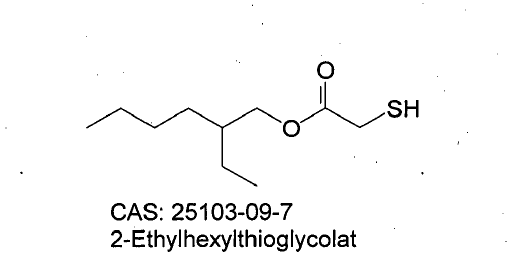

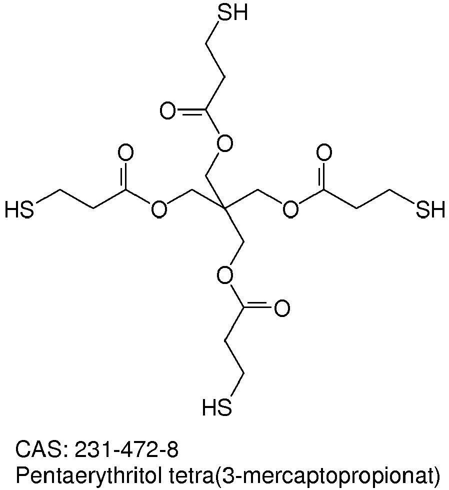

Im Folgenden werden besonders vorteilhafte Silikone näher erläutert.

Die erfindungsgemäß eingesetzten silikonbasierenden Trennbeschichtungen sind solche auf additionsvernetzender Basis, also solche, die sich durch Hydrosilylierung-insbesondere thermisch - härten lassen. Diese Trennsysteme umfassen üblicherweise die folgenden Bestandteile: ein alkenyliertes Polydiorganosiloxan (insbesondere lineare Polymere mit endständigen Alkenylgruppen), ein Polyorganowasserstoffsiloxan-Vernetzungsmittel sowie einen Hydrosilylierungskatalysator, insbesondere der vorstehend bezeichneten Art.

Erfindungsgemäß vorteilhafte, thermisch härtende Trennbeschichtungen auf Basis von additionsvernetzenden Silikonen sind häufig Mehrkomponentensysteme, welche typischerweise aus folgenden Komponenten bestehen:
a) Einem linearen oder verzweigten Polydimethylsiloxan, welches aus ca. 80 bis 200 Dimethylsiloxan-Einheiten besteht und an den Kettenenden mit Vinyldimethylsiloxy-Einheiten abgestoppt ist, oder einem linearen Polydimethylsiloxan, welches aus ca. 80 bis 200 Dimethylsiloxan-Einheiten und ca. 1 bis 10 Methylvinylsiloxan-Einheiten besteht sowie an den Kettenenden mit Vinyldimethylsiloxy-Einheiten abgestoppt ist. Typische Vertreter sind zum Beispiel lösungsmittelfreie, additionsvernetzende Silikonöle, wie DEHESIVE® 920, 912 oder 610, alle kommerziell erhältlich bei Wacker-Chemie GmbH, oder wie SYL-OFF® SL 9104, kommerziell erhältlich bei Dow Corning GmbH.
b) Einem linearen, cyclischen oder verzweigten Vernetzer oder einer beliebigen Mischung dieser, wobei der Vernetzer üblicherweise aus Methylhydrogensiloxy- und Dimethylsiloxy-Einheiten beziehungsweise nur aus Methylhydrogensiloxy-Einheiten zusammengesetzt ist und die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei Wacker-Chemie GmbH kommerziell erhältlich sind, oder der Vernetzer SYL-OFF® 7689, kommerziell erhältlich bei Dow Corning GmbH.
c) Einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei Wacker-Chemie GmbH, oder SYL-OFF® SL 9154, kommerziell erhältlich bei Dow Corning GmbH.
d) Einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei Wacker-Chemie GmbH oder unter der Bezeichnung SYL-OFF® 4000 bei Dow Corning GmbH kommerziell erhältlich ist.

Des Weiteren sind Massen geeignet, wie sie zum Beispiel in der bereits oben erwähnten DE 600 01 779 T2, dort insbesondere Anspruch 12 sowie in den Abschnitten [0036] bis [0050], beschrieben werden. Diese Trennsysteme sind solche, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.

Die Silikone werden auf dem Träger aufgebracht und bilden somit eine geschlossene Silikonbeschichtung.

Als Trägermaterial des Liners können Papiere oder Folien eingesetzt werden. Als Folien werden dabei Polyolefinfolien (Polypropylen- und Polyethylenfolien) oder Polyesterfolien eingesetzt.

Die Behandlung der Silikonschicht bzw. der Silikonschichten kann auf unterschiedliche Weise erfolgen. Das Kontaktgift kann ohne oder auch mit Zusatz von Fremdstoffen, wie Trägergasen oder Lösungsmitteln oder dergleichen, auf die Silikonschicht(en) aufgebracht werden, insbesondere durch auftragen, aufwischen, aufsprühen, aufdrucken, aufwalzen. Das Kontaktgift kann auch - in An- oder Abwesenheit von Fremdstoffen - aus der Gasphase aufgebracht, etwa aufgedampft, werden, oder als Aerosol - in Anwesenheit eines entsprechenden Fremdstoffs - aufgebracht werden, etwa als Nebel oder als Dampf.

Flüssig vorliegende Kontaktgifte können direkt aufgebracht werden, insbesondere durch eines der vorstehend genannten Verfahren.

Das erfindungsgemäße Verfahren kann insbesondere vorteilhaft dadurch fortgesetzt werden, dass auf die behandelte Silikonschicht eine Haftklebemassenschicht aufgetragen wird.

In einer alternativen Vorgehensweise geht man bevorzugt dart vor, dass der Releaseliner mit der behandelten Silikonschicht auf eine Haftklebemassenschicht kaschiert wird.

Gegenstand der Erfindung sind weiterhin Releaseliner, wie sie durch das erfindungsgemäße Verfahren erhältlich sind. Derartige Releaseliner weisen zumindest eine antiadhäsive Silikonschicht auf, die auf additionsvernetzenden Polysiloxanen basiert (siehe hierzu die oben dargestellten Ausführungen). Weiterhin umfasst die Silikonschicht Hydrosilylierungskatalysatoren und gegebenenfalls Vernetzungsmittel, insbesondere Polyorganowasserstoffsiloxan-Verbindungen.

Nach der Vernetzung der Silikonschicht sind die Releaseliner entsprechend der obigen Ausführungen erfindungsgemäß vernetzt und dann mit den Kontaktgiften behandelt worden. Hierdurch erhält man Releaseliner, die denen des Standes der Technik überlegen sind, insbesondere indem die Nachteile des Standes der Technik, wie sie weiter oben beschreiben wurden, verringert werden konnten oder ganz vermieden wurden.

Die Hydrosilylierungskatalysatoren der erfindungsgemäßen Releaseliner sind-zumindest zum Teil - durch die Kontaktgifte vergiftet, also unwirksam gemacht worden. Je höher der Einfluss (insbesondere platin-) vergiftender Verbindungen, desto mehr wird die Reaktion zwischen einer auf den Releaseliner aufgelegten Haftklebemasse und der Silikonbeschichtung behindert mit der Folge, dass die Abzugskräfte des Liners von den Haftklebemassen - verglichen mit denjenigen unbehandelter Releaseliner - geringer sind.

Gegenstand der Erfindung ist letztlich die Verwendung der genannten Kontaktgifte, also von Verbindungen, die für Hydrosilylierungskatalysatoren als Kontaktgifte wirken, zur Behandlung einer auf einem Releaseliner befindlichen Silikonbeschichtung zur Regulierung der Abzugskräfte, mit denen der Releaseliner von einer auf ihn beschichteten Haftklebemasse abgezogen werden kann; insbesondere nach einem Verfahren, wie es vorstehend ausgeführt wurde. Insbesondere erfindungsgemäß ist die Verwendung von Verbindungen, die für platinhaltige Katalysatoren als Kontaktgifte wirken, zur Behandlung einer auf einem Releaseliner befindlichen Silikonbeschichtung zur Regulierung der Abzugskräfte, mit denen der Releaseliner von einer auf ihn beschichteten Haftklebemasse abgezogen werden kann.

Schließlich betrifft die Erfindung die Verwendung der erfindungsgemäßen Releaseliner in einem Klebeband.

### Beispiele

### Allgemeine Vorgehensweise

### Herstellung der Release Liner

Eine vernetzbare Silikonmasse bestehend aus 70 Teilen Dow Corning SYL-OFF® SL 9104, 30 Teilen Dow Corning SYL-OFF® SL 9154, 8,9 Teile Dow Corning SYL-OFF® SL 7689 und 1,6 Teile Dow Corning SYL-OFF® 4000 wurde auf einer PET-Folie (Lumirror 60.01, 75µm, Toray) mit Hilfe eines Rakels Nr. 1 aus 30%iger Lösung und Benzin aufgetragen. Das Silikon wurde bei 150 °C für 30 Sekunden vernetzt. Der Silikonauftrag wurde auf 1,3 g/m² eingestellt. Wenn nicht anders beschrieben, wurde der Release Liner nach zwei Tagen Reifezeit wie unter den einzelnen Beispielen beschrieben vorbehandelt und mit Klebmasse beschichtet.

### Herstellung der Klebmasse

In einer radikalischen Polymerisation in einem konventionellen 200 L-Reaktor wurden 0,7 kg Acrylsäure, 33,95 kg 2-Ethylhexylacrylat, 33,95 kg Butylacrylat, 1,4 kg Gylcidylmethacrylat und 23,35 kg Siedegrenzbenzin 60/95 sowie 23,35 kg Aceton vorgelegt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 3,5 h Reaktionszeit wurden 10,50 kg Siedegrenzbenzin 60/95 als Verdünnung hinzugegeben. Eine weitere Verdünnung erfolgte nach 7,5 h mittels Zugabe von 10,5 kg Siedegrenzbenzin 60/95. Nach 24 h Reaktionszeit wurde die Polymerisation abgebrochen und das Reaktionsgefäß auf Raumtemperatur abgekühlt.

Anschließend wurde das Polymer mit 37,5 Gew.-% Sylvares TP 95 (Terpen-Phenol-Harz mit einer Erweichungstemperatur von 95 °C) und 0,3 Gew.-% ZnCl₂ abgemischt (Gew.-% jeweils bezogen auf das Polymer).

### Vorbereitung der Prüfstreifen

Die oben beschriebene Haftklebmasse wurde auf den vorbehandelten Trennfolien mit Hilfe eines Streichbalkens aufgetragen. Die Klebmasse wurde nach dem Abdampfen des größten Teils des Lösungsmittels für 15 Minuten bei 120 °C in einem Umluftofen getrocknet. Es wurde ein Masseauftrag von 50 g/m² gewählt. Nach dem Abkühlen der Proben wurde eine 23 µm dicke PET-Folie (Polibond D23H, Polifibra Folien GmbH) auf die Klebmasse kaschiert und der Verbund in 2 cm breite Streifen geschnitten.

### Beschreibung der Messung

Die Abzugskraft der PET-Folie und Klebmasse vom Release Liner wurde in einem Winkel von 180° bei einer Abzugsgeschwindigkeit von 0,3 m/min gemessen, wobei die Messung bei 23±1 °C und einer relativen Luftfeuchte von 50±5 % durchgeführt wurde. Die Messung der Abzugskraft wurde ca. 24 Stunden nach Beschichtung des Trennpapiers mit der Klebmasse gemessen.

### Vergleichsbeispiel 1

Mit einem mit Toluol getränkten Stück Zellstoff wurde mehrfach über den oben beschriebenen Release Liner gewischt.

### Vergleichsbeispiel 2

Abweichend zu der allgemeinen Beschreibung wurde der Release Liner für 7 Tage gelagert. Anschließend wurde mit einem mit Toluol getränkten Stück Zellstoff mehrfach über den oben beschriebenen Release Liner gewischt.

### Vergleichsbeispiel 3

Abweichend zu der allgemeinen Beschreibung wurde der Release Liner für 14 Tage gelagert. Anschließend wurde mit einem mit Toluol getränkten Stück Zellstoff mehrfach über den oben beschriebenen Release Liner gewischt.

### Vergleichsbeispiel 4

Abweichend zu der allgemeinen Beschreibung wurde der Release Liner für 21 Tage gelagert. Anschließend wurde mit einem mit Toluol getränkten Stück Zellstoff mehrfach über den oben beschriebenen Release Liner gewischt.

### Vergleichsbeispiel 5

Abweichend zu der allgemeinen Beschreibung wurde der Release Liner für 42 Tage gelagert. Anschließend wurde mit einem mit Toluol getränkten Stück Zellstoff mehrfach über den oben beschriebenen Release Liner gewischt.

### Beispiel 1

Mit einem mit 1%iger Lösung von Irganox 1726 in Toluol getränkten Stück Zellstoff wurde mehrfach über den oben beschriebenen Release Liner gewischt.

### Beispiel 2

Mit einem mit 10%iger Lösung von Irganox 565 in Toluol getränkten Stück Zellstoff wurde mehrfach über den oben beschriebenen Release Liner gewischt.

### Beispiel 3

Mit einem mit 1%iger Lösung von Irganox PS800 in Toluol getränkten Stück Zellstoff wurde mehrfach über den oben beschriebenen Release Liner gewischt.

### Beispiel 4

Mit einem mit 1%iger Lösung von Merbol in Toluol getränkten Stück Zellstoff wurde mehrfach über den oben beschriebenen Release Liner gewischt.

### Beispiel 5

Mit einem mit 1%iger Lösung von Weston 618F in Toluol getränkten Stück Zellstoff wurde mehrfach über den oben beschriebenen Release Liner gewischt.

### Beispiel 6

Mit einem mit 1%iger Lösung von Triphenylphosphit in Toluol getränkten Stück Zellstoff wurde mehrfach über den oben beschriebenen Release Liner gewischt.

### Beispiel 7

Mit einem mit 1%iger Lösung von Triphenylphosphin in Toluol getränkten Stück Zellstoff wurde mehrfach über den oben beschriebenen Release Liner gewischt.

### Beispiel 8

Mit einem mit 1%iger Lösung von Pentaerythritol-tetra-(3-mercapto-propionat) in Toluol getränkten Stück Zellstoff wurde mehrfach über den oben beschriebenen Release Liner gewischt.

### Beispiel 9

Mit einem mit 1%iger Lösung von 2-Ethylhexylthioglyconat in Toluol getränkten Stück Zellstoff wurde mehrfach über den oben beschriebenen Release Liner gewischt.

### Beispiel 10

Mit einem mit 1%iger Lösung von Dodecylmercaptan in Toluol getränkten Stück Zellstoff wurde mehrfach über den oben beschriebenen Release Liner gewischt.

**Tabelle 1**

| **Experiment** | **Abzugskraft [cN/cm]** |
|---|---|
| Vergleichsbeispiel 1 | 100 |
| Vergleichsbeispiel 2 | 65 |
| Vergleichsbeispiel 3 | 43 |
| Vergleichsbeispiel 4 | 25 |
| Vergleichsbeispiel 5 | 14 |
| Beispiel 1 | 27 |
| Beispiel 2 | 19 |
| Beispiel 3 | 48 |
| Beispiel 4 | 12 |
| Beispiel 5 | 25 |
| Beispiel 6 | 25 |
| Beispiel 7 | 27 |
| Beispiel 8 | 15 |
| Beispiel 9 | 18 |
| Beispiel 10 | 25 |

Die Vergleichsbeispiele zeigten, wie die Abzugskraft der Acrylatklebmasse mit zunehmender Reifezeit des Release Liners sinkt.

Anhand der Beispiele ist zu entnehmen, dass durch das Behandeln des zwei Tage alten Release Liners mit Platin-Giften die Abzugskräfte ein Niveau erreichen, das bei unbehandelten Release Linern erst nach mehreren Wochen beobachtet wird.

Die untersuchten Kontaktgifte waren geeignet, die Aufgabe der Erfindung hervorragend zu erfüllen, ohne einen wesentlichen Einfluss auf die Eignung der Haftklebemassen für ihren jeweiligen Verwendungszweck zu zeigen. Als besonders hervorragend geeignete Kontaktgifte haben sich die Thioverbindungen herausgestellt, insbesondere Dodecylmercaptan und Didodecyl-3-3'-Thiopropionat. Diese Verbindungen zeigten den geringsten Einfluss auf die klebtechnischen Eigenschaften der Klebmasse bezüglich ihres jeweiligen Einsatzgebietes.

## Patentansprüche

1. Verfahren zur Herstellung eines Releaseliners umfassend zumindest eine vernetzte Silikonbeschichtung auf Basis additionsvernetzender Polysiloxane sowie Hydrosilylierungskatalysatoren, wobei
die Hydrosilylierungskatalysatoren Platin, eine Platin-Komplexverbindung oder eine Platinverbindung sind,
die Silikonbeschichtung mit Verbindungen behandelt wird, die für die Hydrosilylierungskatalysatoren als Kontaktgifte wirken, wobei die Kontaktgifte ausgewählt sind aus der Gruppe bestehend aus 2-Methyl-1 H-imidazol, Dicyandiamid, Diphenylamin, Triethylentetramin, Tris(2,4-di-tert-butylphenyl)phosphit, N-(2-Aminoethyl)piperazin, Dodecylamin, Dodecylmercaptan, Distearylpentaerythritoldiphosphit, Tributylphosphit, Triphenylphosphin, Triphenylphosphit, 1,4-Bisoxazolinbenzol, Benzimidazol-2-thiol, Didodecyl-3-3'-thiopropionat, 2,4-Bis-(n-octylthio)-6-(4-hydroxy-3,5-di-tert-butyl-anilino)-1,3,5 -triazin, 2-Ethylhexylthioglycolat, Pentaerythritol-tetra(3-mercaptopropionat);
**dadurch gekennzeichnet, dass**
die Kontaktgifte unter Zusatz von Fremdsubstanzen, die ausgewählt sind aus der Gruppe bestehend aus Trägergasen und Lösungsmitteln, auf die Silikonbeschichtung aufgetragen, aufgewischt, aufgesprüht, aufgedruckt, aufgewalzt oder aus der Gasphase oder als Aerosol aufgebracht werden; und
auf die behandelte, Silikonschicht eine Haftklebemassenschicht aufgetragen wird oder der Releaseliner mit der behandelten Silikonschicht auf eine Haftklebemassenschicht kaschiert wird.

2. Verfahren zur Herstellung eines Releaseliners umfassend zumindest eine vernetzte Silikonbeschichtung auf Basis additionsvernetzender Polysiloxane sowie Hydrosilylierungskatalysatoren, wobei
die Hydrosilylierungskatalysatoren Platin, eine Platin-Komplexverbindung oder eine Platinverbindung sind,
die Silikonbeschichtung mit Verbindungen behandelt wird, die für die Hydrosilylierungskatalysatoren als Kontaktgifte wirken, wobei die Kontaktgifte ausgewählt sind aus der Gruppe bestehend aus 2-Methyl-1 H-imidazol, Dicyandiamid, Diphenylamin, Triethylentetramin, Tris(2,4-di-tert-butylphenyl)phosphit, N-(2-Aminoethyl)piperazin, Dodecylamin, Dodecylmercaptan, Distearylpentaerythritoldiphosphit, Tributylphosphit, Triphenylphosphin, Triphenylphosphit, 1,4-Bisoxazolinbenzol, Benzimidazol-2-thiol, Didodecyl-3-3'-thiopropionat, 2,4-Bis-(n-octylthio)-6-(4-hydroxy-3,5-di-tert-butyl-anilino)-1,3,5-triazin, 2-Ethylhexylthioglycolat, Pentaerythritol-tetra(3-mercaptopropionat);
**dadurch gekennzeichnet, dass** die Kontaktgifte ohne Zusatz von Fremdsubstanzen, wie Trägergasen oder Lösungsmitteln, auf die Silikonbeschichtung aufgetragen,
aufgewischt, aufgesprüht, aufgedruckt, aufgewalzt oder aus der Gasphase aufgebracht werden und
auf die behandelte Silikonschicht eine Haftklebemassenschicht aufgetragen wird oder der Releaseliner mit der behandelten Silikonschicht auf eine Haftklebemassenschicht kaschiert wird.

## Claims

1. Process for producing a release liner encompassing at least one crosslinked silicone coating based on addition-crosslinking polysiloxanes, and also hydrosilylation catalysts, wherein
the hydrosilylation catalysts are platinum, a platinum-complex compound or a platinum compound, the silicone coating is treated with compounds which act as contact poisons for the hydrosilylation catalysts, wherein the contact poisons are selected from the group consisting of 2-methyl-1H-imidazole, dicyandiamide, diphenylamine, triethylenetetramine, tris(2,4-di-tert-butylphenyl) phosphite, N-(2-aminoethyl)piperazine, dodecylamine, dodecyl mercaptan, distearylpenta-erythritol diphosphite, tributyl phosphite, triphenylphosphine, triphenyl phosphite, 1,4-bisoxazolinebenzene, benzimidazole-2-thiol, didodecyl 3,3'-thiopropionate, 2,4-bis(n-octylthio)-6-(4-hydroxy-3,5-di-tert-butylanilino)-1,3,5-triazine, 2-ethylhexyl thioglycolate and pentaerythritol tetra(3-mercaptopropionate); **characterized in that**
when the contact poisons are applied to the silicone coating by wiping, spraying, printing, rolling, or from the gas phase, or in the form of aerosol, or by any other application method, foreign substances are added, which foreign substances are selected from the group consisting of carrier gases and solvents; and
a pressure-sensitive adhesive-mass layer is applied to the treated silicone layer or the release liner is laminated with the treated silicone layer onto a pressure-sensitive adhesive-mass layer.

2. Process for producing a release liner encompassing at least one crosslinked silicone coating based on addition-crosslinking polysiloxanes, and also hydrosilylation catalysts, wherein
the hydrosilylation catalysts are platinum, a platinum-complex compound or a platinum compound, the silicone coating is treated with compounds which act as contact poisons for the hydrosilylation catalysts, wherein the contact poisons are selected from the group consisting of 2-methyl-1H-imidazole, dicyandiamide, diphenylamine, triethylenetetramine, tris(2,4-di-tert-butylphenyl) phosphite, N-(2-aminoethyl)piperazine, dodecylamine, dodecyl mercaptan, distearylpenta-erythritol diphosphite, tributyl phosphite, triphenylphosphine, triphenyl phosphite, 1,4-bisoxazolinebenzene, benzimidazole-2-thiol, didodecyl 3,3¹-thiopropionate, 2,4-bis(n-octylthio)-6-(4-hydroxy-3,5-di-tert-butylanilino)-1,3,5-triazine, 2-ethylhexyl thioglycolate and pentaerythritol tetra(3-mercaptopropionate); **characterized in that** when the contact poisons are applied to the silicone coating by wiping, spraying, printing, rolling, or from the gas phase, or by any other application method, no foreign substances are added, examples being carrier gases or solvents, and
a pressure-sensitive adhesive-mass layer is applied to the treated silicone layer or the release liner is laminated with the treated silicone layer onto a pressure-sensitive adhesive-mass layer.

## Revendications

1. Procédé pour la fabrication d'un revêtement antiadhésif comprenant au moins un revêtement réticulé de silicone à base de polysiloxanes réticulant par addition ainsi que de catalyseurs d'hydrosilylation, les catalyseurs d'hydrosilylation étant le platine, un composé complexe du platine ou un composé du platine, le revêtement de silicone étant traité par des composés qui agissent comme poisons de contact pour les catalyseurs d'hydrosilylation, les poisons de contact étant choisis dans le groupe constitué par le 2-méthyl-1H-imidazole, le dicyanodiamide, la diphénylamine, la triéthylènetétraamine, le phosphite de tris(2,4-di-tert-butylphényle), la N-(2-aminoéthyl)pipérazine, la dodécylamine, le dodécylmercaptan, le diphosphite de distéarylpentaérythritol, le phosphite de tributyle, la triphénylphosphine, le phosphite de triphényle, le 1,4-bisoxazolinebenzène, le benzimidazole-2-thiol, le 3-3'-thiopropionate de didodécyle, la 2,4-bis-(n-octylthio)-6-(4-hydroxy-3,5-di-tert-butylanilino)-1,3,5-triazine, le thioglycolate de 2-éthylhexyle, le tétra(3-mercaptopropionate) de pentaérythritol, **caractérisé en ce que**
les poisons de contact sont appliqués, appliqués à l'aide d'une éponge, pulvérisés, imprimés, laminés ou appliqués à partir de la phase gazeuse ou sous forme d'aérosol avec addition de substances étrangères qui sont choisies dans le groupe constitué par les gaz support et les solvants, sur le revêtement en silicone ; et une couche de masse autoadhésive est appliquée sur la couche de silicone traitée ou le revêtement antiadhésif présentant la couche de silicone traitée est contrecollé sur une couche de masse autoadhésive.

2. Procédé pour la fabrication d'un revêtement antiadhésif comprenant au moins un revêtement réticulé de silicone à base de polysiloxanes réticulant par addition ainsi que de catalyseurs d'hydrosilylation, les catalyseurs d'hydrosilylation étant le platine, un composé complexe du platine ou un composé du platine, le revêtement de silicone étant traité par des composés qui agissent comme poisons de contact pour les catalyseurs d'hydrosilylation, les poisons de contact étant choisis dans le groupe constitué par le 2-méthyl-1H-imidazole, le dicyanodiamide, la diphénylamine, la triéthylènetétraamine, le phosphite de tris(2,4-di-tert-butylphényle), la N-(2-aminoéthyl)pipérazine, la dodécylamine, le dodécylmercaptan, le diphosphite de distéarylpentaérythritol, le phosphite de tributyle, la triphénylphosphine, le phosphite de triphényle, le 1,4-bisoxazolinebenzène, le benzimidazole-2-thiol, le 3-3'-thiopropionate de didodécyle, la 2,4-bis-(n-octylthio)-6-(4-hydroxy-3,5-di-tert-butylanilino)-1,3,5-triazine, le thioglycolate de 2-éthylhexyle, le tétra(3-mercaptopropionate) de pentaérythritol, **caractérisé en ce que** les poisons de contact sont appliqués, appliqués à l'aide d'une éponge, pulvérisés, imprimés, laminés ou appliqués à partir de la phase gazeuse sans addition de substances étrangères, telles que des gaz support ou des solvants, sur le revêtement en silicone ; et une couche de masse autoadhésive est appliquée sur la couche de silicone traitée ou le revêtement antiadhésif présentant la couche de silicone traitée est contrecollé sur une couche de masse autoadhésive.
